# EUROPEAN PATENT SPECIFICATION

(11) **EP 2 096 920 B1**
(45) Date of publication and mention of the grant of the patent: **02.12.2015**
(21) Application number: 07824792.1
(22) Date of filing: 04.12.2007
(51) Int. Cl.: A01N 43/653, A01N 25/02, A01N 25/22, A01P 3/00, B27K 3/34

(54) **TRIAZOLE FORMULATION**
TRIAZOL FORMULIERUNG
FORMULATION À BASE DE TRIAZOLES

(30) Priority: 15.12.2006 GB 0625095
(43) Date of publication of application: 09.09.2009
(73) Proprietor: Syngenta Limited, Guildford Surrey GU2 7YH (GB)
(72) Inventor: BROQUET, Jean-Charles Daniel Nicolas, Berkshire RG42 6EY (GB); CHUNG, Richard Chi Shing, Berkshire RG42 6EY (GB); BELL, Gordon Alastair, Berkshire RG42 6EY (GB)
(74) Representative: Syngenta International AG
(86) International application number: PCT/GB2007/004636
(87) International publication number: WO 2008/071915

(56) References cited:
- EP-A- 0 095 242
- EP-A- 0 393 746
- EP-A- 0 682 865
- EP-A- 1 205 108
- WO-A-96/01054
- WO-A-03/037084
- WO-A-2005/104844
- WO-A-2006/035316
- WO-A-2007/045455
- DE-A1- 19 648 888
- GB-A- 2 264 641
- SYNGENTA: 'Safety Data Sheet ARTEA 330 EC', [Online] 01 September 2003, pages 1 - 6, XP055152933 Retrieved from the Internet: <URL:http://www.amaroc.ma/produits/Details- produits/FDS/ARTEA-330-EC.pdf> [retrieved on 2014-11-13]
- 'MENARA fungicide - safety data', [Online] 01 January 2009, pages 263 - 268, XP055152939 Retrieved from the Internet: <URL:http://www3.syngenta.com/country/ie/Si teCollectionDocuments/Product_Guide/Menara_ irl_safety_data.pdf> [retrieved on 2014-11-13]
- PEPPI LAINE ET AL: 'CEREALS / CONTROL OF LEAF DISEASES EVALUATION OF THE FUNGICIDES MENARA AND BRAVO 500 IN WHEAT Study director: Trial ID Crop, Variety Location Experimental starting and completion F' MTT AGRIFOOD RESEARCH FINLAND 2006 FUNGICIDES AND INSECTICIDES, [Online] 01 January 2006, pages 1 - 23, XP055152946 Retrieved from the Internet: <URL:http://portal.mtt.fi/portal/page/porta l/mtt_en/mtt/facilities/testing_PPs/trialre sults/2006/fungicides_cereals_pea/723220D1C 6374E3DE040A8C0023C62C9> [retrieved on 2014-11-13]

## Description

This invention relates to a concentrated solution comprising two triazole compounds and a water-miscible solvent, wherein the two triazole compounds are selected from cyproconazole, propiconazole and difenoconazole; the total concentration of the two triazole compounds is from 0.5 to 600g/l; and the ratio of the total weight of the two triazole compounds to the total weight of any water-immiscible solvent is greater than 2 to 1 and also so to the use of the concentrated solutions in water diluted form. Furthermore, it relates to the use of such concentrated solutions for agricultural or materials protection purposes and to the use of one triazole compound to prevent or delay crystallisation of a second triazole compound.

Many biologically active compounds [often referred to as active ingredients, for example pharmaceutical or agrochemical active ingredients] belong to the triazole group of chemicals. Often mixtures of triazole compounds are used because their biological spectra of activity complement one another. In use, the triazoles must often be applied *via* an aqueous medium; this may require that a concentrated formulation of a triazole is added to a large volume of water, the 'dilution factor' [i.e. volume ratio of concentrate to additional water] typically being from 1:1 to 1:1000.

The physical properties of the triazole chemicals vary from compound to compound but invariably the triazoles are either solid or are viscous liquids at room temperature. Some triazoles may exist as a viscous oil plus a solid in equilibrium. Generally, the triazoles have very low solubilities in water at the temperatures at which they are used. The solubility in organic liquids varies significantly from triazole to triazole.

EP0095242, EP0393746, WO96/01054 and DE19648888 relate to certain formulations comprising more than one triazole compound.

Problems associated with formulating a compound having a low solubility in water are discussed in WO 03/037084. One approach is to dissolve a water-insoluble active ingredient in a water-immiscible solvent, such as an aromatic hydrocarbon, to form an emulsifiable concentrate (EC). This can be stored as a stable solution and diluted with water when ready for use to form a milky emulsion of small droplet size. Water-insoluble active ingredients that are not readily soluble in standard water-immiscible solvents may be dissolved in a water-miscible solvent to form a storage stable dispersible concentrate (DC). The active ingredient forms a suspension on dilution with water. Dispersible concentrates of this kind are described in, for example, WO 92/10937. These DCs are generally three component formulations in which a solid water-insoluble active ingredient and a dispersant are solubilised in a water-miscible solvent. A range of dispersants are suitable including alkylated vinylpyrrolidone polymers, ethylene oxide propylene oxide/propylene glycol condensates, nonylphenol ethylene oxide adducts and various ethoxylates. The water-miscible solvents include acetonitrile, γ-butyrolactone, dimethyl ketone, dimethylfuran, dimethyl sulphoxide, methanol and *N*-methyl pyrrolidone.

A drawback when using water-miscible solvents for dissolving active ingredients of low water solubility is the poor dilution properties of the resultant DC composition in water; the active ingredient is often rapidly precipitated as coarse crystals giving both application problems, such as syringe, spray filter or nozzle blockage, and poor or inconsistent bioefficacy. To prevent (or, more usually, delay) crystallisation, an excess of emulsifying or dispersing agent, typically at a 1:1 ratio with the active ingredient, may be incorporated but this ratio leads to concentrations of these agents which may give rise to undesirable side-effects, such as phytotoxicity problems.

This problem of crystallisation has been seen when trying to prepare SL formulations containing even just one triazole active ingredient [for example cyproconazole or difenoconazole]; these formulations are known as "solo" formulations. Therefore one formulation approach which has been used with triazole formulations [either "solo" triazole or triazole mixtures] is to prepare a formulation concentrate which relies not only on a water-miscible solvent but also on a water-immiscible solvent, the water-immiscible solvent being present so as to prevent crystallisation of the triazole compounds when the formulation concentrate is added to water.

The water-miscible solvent protects the formulation concentrate against crystallisation at low temperature during storage [for instance, below 5°C] but when the concentrate is added to water, the water-miscible solvent moves in to the water phase and therefore the water-immiscible solvent, which remains with the triazole, is necessary to prevent or delay crystallisation of the triazole upon dilution of the concentrate in water. The presence of water-immiscible solvent in the formulation concentrate limits the space available for polar water-miscible solvent, which in turn has an impact upon the maximum concentration of triazole that can be present in the formulation concentrate.

Surprisingly, the crystallisation problems discussed above have now been overcome without relying on a water-immiscible solvent [or by using only low levels of water-immiscible solvent] and by developing a formulation system which, although not appropriate for a single triazole active ingredient, does nevertheless work successfully for a mixture of triazoles due to interaction between the triazole active ingredients.

Thus according to the present invention there is provided a concentrated solution comprising two triazole compounds and a water-miscible solvent, wherein the two triazole compounds are selected from cyproconazole, propiconazole and difenoconazole; the total concentration of the two triazole compounds is from 0.5 to 600g/l; and the ratio of the total weight of triazole compounds to the total weight of water-immiscible solvent is greater than 2 to 1. Suitably, this ratio is greater than 5:1; more suitably it is greater than 10:1; and even more suitably it is greater than 20:1. Most suitably the term means that the composition comprises no water-immiscible solvent.

The interaction between triazoles may be described as having the effect that whilst 'x' grammes of a water-immiscible solvent, 'S', are required to prepare a "solo-formulation" of 'X' grammes of triazole 'A'; and 'y' grammes of a water-immiscible solvent, 'S', are required to prepare a "solo-formulation" of 'Y' grammes of triazole 'B', surprisingly, when a "mixture-formulation" comprising 'X' grammes of triazole 'A' and 'Y' grammes of triazole 'B' is prepared, the amount of water-immiscible solvent, 'S', required is significantly less than 'x + y' grammes.

The concentrated solution of the present invention can be diluted in water before use. A typical 'dilution' in water may involve one litre of formulation concentrate added to from 1 to 1000 litres of water.

In the concentrated solution according to the invention the total amount of triazoles is from 0.5 to 600g/l, more usually from 10 to 500g/l, and typically from 200 to 450g/l.

In a still further aspect of the invention there is provided the use of the concentrated solution as described herein for the protection of industrial materials [referred to as "materials protection"]. Suitably the industrial material to be protected is selected from the group consisting of: wood; plastic; wood plastic composite; paint; paper; and wallboards.

The term "Industrial Material" includes those materials used in construction and the like. For example, Industrial Material may be structural timber, doors, cupboards, storage units, carpets, particularly natural fibre carpets such as wool and hessian, plastics, wood (including engineered wood) and wood plastic composite.

In a particular embodiment the Industrial Material is a coating. "Coating" includes compositions applied to a substrate, for example, paints, stains, varnishes, lacquers, primers, semi-gloss coatings, gloss coatings, flat coatings, topcoats, stain-blocking coatings, penetrating sealers for porous substrates, concrete, marble, elastomeric coatings, mastics, caulks, sealants, board and panelling coatings, transportation coatings, furniture coatings, coil coatings, bridge and tank coatings, surface marking paints, leather coatings and treatments, floor care coatings, paper coatings, personal care coatings [such as for hair, skin or nails], woven and non-woven fabric coatings, pigment printing pastes, adhesive coatings [such as, for example, pressure sensitive adhesives and wet- or dry-laminating adhesives] and plaster.

Suitably "coating" means paint, varnish, stain, lacquer or plaster; more suitably "coating" is a lacquer or alternatively "coating" may mean paint. Paint may comprise, for example, a film former and a carrier (which carrier can be water and/or an organic solvent) and optionally a pigment.

In addition to this, "Industrial Material" includes adhesives, sealants, joining materials, joints and insulation material. In a particular embodiment "Industrial Material" means structural timber. In a further embodiment "Industrial Material" means engineered wood. In a further embodiment "Industrial Material" means plastic.

Plastics includes plastic polymers and copolymers, including: acrylonitrile butadiene styrene, butyl rubber, epoxys, fluoropolymers, isoprene, nylons, polyethylene, polyurethane, polypropylene, polyvinyl chloride, polystyrene, polycarbonate, polyvinylidene fluoride, polyacrylate, polymethyl methacrylate, polyurethane, polybutylene, polybutylene terephthalate, polyether sulfone, polyphenyllenoxide, polyphenylene ether, polyphenylene sulfide, polyphtatamide, polysulphene, polyester, silicone, styrene butadiene rubber and combinations of polymers. In a further embodiment "Industrial Material" means polyvinyl chloride (PVC). In a further embodiment "Industrial Material" means polyurethane (PU). In a further embodiment "Industrial Material" means wood plastic composite (WPC). Wood plastic composite is a material that is well known in the art. A review of WPCs can be found in the following publication - Craig Clemons - Forrest Products Journal. June 2002 Vol 52. No. 6. pp 10-18.

"Wood" is to be understood to include wood and wood products, for example: derived timber products, lumber, plywood, chipboard, flakeboard, laminated beams, oriented strandboard, hardboard, particle-board, tropical wood, structural timber, wooden beams, railway sleepers, components of bridges, jetties, vehicles made of wood, boxes, pallets, containers, telegraph-poles, wooden fences, wooden lagging, windows and doors made of wood, plywood, chipboard, joinery, or wooden products which are used, quite generally, for building houses or decks, in building joinery or wood products that are generally used in house-building including engineered wood, construction and carpentry.

"Industrial Material" also includes cooling lubricants and cooling and heating systems, ventilation and air conditioning systems and parts of production plants, for example cooling-water circuits.

"Industrial Material" also includes wallboards such as gypsum based wallboards. Further disclosed are "Industrial Materials" comprising a composition as herein described. Said Industrial materials are selected from the group consisting of: wood; plastic; wood plastic composite; paint; paper; and wallboards. In a particular embodiment said Industrial materials comprise wood.

Examples of ways in which a fungus or Industrial Material can be treated with a fungicide according to the invention are: by including said fungicide in the Industrial Material itself, absorbing, impregnating, treating (in closed pressure or vacuum systems) said material with said fungicide, dipping or soaking the building material, or coating the building material for example by curtain coating, roller, brush, spray, atomisation, dusting, scattering or pouring application.

Any water-miscible polar solvent that can dissolve the two or more triazoles may be used in the invention. Suitable solvents include γ-butyrolactone, tetrahydrofurfuryl alcohol, *N*-methyl pyrrolidone, dimethyl sulphoxide, *N,N-*dimethylformamide, propylene glycol and ethyl lactate. Preferred water-miscible solvents are γ-butyrolactone, ethyl lactate, propylene glycol and tetrahydrofurfuryl alcohol, and a particularly preferred solvent is tetrahydrofurfuryl alcohol. Mixtures of water-miscible polar solvents may also be used. The amount of solvent used is sufficient to bring the total solution to the required final volume of the formulation concentrate.

Although not essential, the compositions of the present invention may include other additives, for instance, polymer stabilisers or anti-settling agents to improve dilution. Examples of suitable stabilisers or anti-settling agents include water soluble and water insoluble polymers such as ethyl cellulose, casein, hydroxy propyl cellulose, *Avicel*™ CL-611 (based on microcrystalline cellulose), *Agrimer*™ VEMA AN-216 (a vinylether maleic anhydride copolymer, MW 55,000 to 80,000 Dalton), NU-FILM-P™ (poly-1-p-menthene) and *Kelzan*™ (a xanthan gum). Such additives are conveniently used in amounts up to 5g/l, for example 1 to 4g/l, typically 2.5g/l, depending on their solubility in the polar water-miscible solvent used. For instance, the maximum amount of *Avicel* CL-611 and *Kelzan* that can be dissolved in an *N-*methyl pyrrolidone based concentrate is about 1g/l.

The composition can also contain emulsifiers to help with the dispersion of the water insoluble active ingredients in water. The emulsifiers can be selected from those commonly used in the art and can be non-ionic, anionic or mixtures thereof. Examples of suitable non-ionic emulsifiers include castor oil ethoxylates, block copolymers, alkylphenol ethoxylates, alcohol ethoxylates, tristyrylphenol ethoxylates, sorbitan esters and their ethoxylate derivatives, fatty acid ethoxylates and alkyl polyglucosides. Examples of anionic emulsifiers include salts of alkylbenzene sulphonic acid, salts of alkylsulphosuccinic acid, alkylaryl phosphate ester ethoxylates and alcohol phosphate ester ethoxylates.

An aqueous fungicidal solution may be applied by spraying, or by any other known technique, to the location requiring treatment.

Thus, in a further aspect of the present invention, there is provided the use of the concentrated solution according to the invention to combat or control an agricultural disease which comprises applying to the disease or to a locus of the disease, a fungicidally effective amount of either the concentrated solution itself or a combination of the concentrated solution and water.

The advantage of the concentrated fungicidal solutions of the present invention is that they can produce sub-micron essentially mono-disperse particles on dilution into water which are stable to subsequent growth for at least 24 hours.

The compositions of the present invention may also include a further fungicide, such as chlorothalonil.

The invention is illustrated with reference to, but is not limited by, the following Example. In the Example the following abbreviations are used:
NMP = *N*-methylpyrrolidone THFA = tetrahydrofurfuryl alcohol

NMP and THFA are both water-miscible solvents; OCTASOLV™ (2-ethylhexyl acetate) is a water-immiscible solvent; GENAPOL™O 100, NANSA™EVM 63/B, EMULSOGEN™EL360 and SOPROPHORT™SU are each emulsifers; FOAM BLAST™ 281 is an antifoam agent; and LUVITEC™K-30 is a protective colloid.

### EXAMPLE 1

This Example demonstrates that despite the absence of a water-immiscible solvent, non-crystallising compositions comprising two triazole compounds can be prepared even though corresponding compositions with just a single triazole do display crystallisation.

Table 1 provides recipes for 10 samples [referred to as samples A to J]. Each sample was prepared by mixing the individual ingredients together and then gently warming and stirring the mixture until a uniform solution was prepared, which was then allowed to cool to room temperature. Each sample was then assessed for any crystallisation behaviour in the following manner:
A 1% [by volume] dilution was prepared by adding 1ml of the sample to 100ml of Standard Hard Water A or D in a stoppered 100ml measuring cylinder. The diluted sample was then left standing at ambient temperature and examined for the presence of crystalline sediment 24 hours after preparation. The table shows whether or not each sample produced crystals when it was diluted in water [and whether or not any crystallisation had been expected].

### Discussion of results:

Reference samples A and B contain both a water-miscible solvent and a high concentration of a water-immiscible solvent. As expected, neither sample produced crystals when diluted into water.

By contrast, samples C, D, E and H are very similar to samples A and B but, unlike A and B, they contain no water-immiscible solvent. Surprisingly, despite the omission of a water-immiscible solvent, these samples also did not produce crystals when diluted into water.

Reference samples F, G, I and J are 'solo' compositions [that is, they each contain only one triazole compound, rather than two triazole compounds]. Sample G is essentially sample A but with one triazole [propiconazole] removed. Likewise, sample I is sample E but with cyproconazole removed whilst sample J is sample E but with difenoconazole removed. Sample F has the same basic recipe as samples C, D and E but its single triazole concentration is significantly lower than the total joint triazole concentration in samples C, D and E.

The present invention is demonstrated by the fact that the solo compositions F, G, I and J each had crystallisation problems whereas the mixture compositions C, D, E and H did not crystallise.

**Table 1 (* reference examples)**

| **Sample:** | **A*** | **B*** | **C** | **D** | **E** | **F*** | **G*** | **H** | **I*** | **J*** |
|---|---|---|---|---|---|---|---|---|---|---|
| Ingredient [concentration in g/l] | | | | | | | | | | |
| Cyproconazole | 160 | 80 | 160 | 80 | 150 | 240 | 160 | 160 | - | 150 |
| Propiconazole | 250 | 250 | 250 | 250 | - | - | - | 250 | - | - |
| Difenoconazole | - | - | - | - | 250 | - | - | - | 250 | - |
| OCTASOLV (2-ethylhexyl acetate) | to 1 litre | to 1 litre | - | - | - | - | to 1 litre | - | - | - |
| NMP | 100 | 100 | - | - | - | - | 100 | to 1 litre | - | - |
| GENAPOL O 100 | 60 | 60 | - | - | - | - | 60 | 60 | - | - |
| NANSA EVM 63/B | 50 | 50 | 21 | 21 | 21 | 21 | 50 | 50 | 21 | 21 |
| EMULSOGEN EL360 | 70 | 70 | 63 | 63 | 63 | 63 | 70 | 70 | 63 | 63 |
| SOPROPHORBSU | - | - | 126 | 126 | 126 | 126 | - | - | 126 | 126 |
| THFA | - | - | to 1 litre | to 1 litre | to 1 litre | to 1 litre | - | - | to 1 litre | to 1 litre |
| FOAM BLAST 281 | - | - | 1 | 1 | 1 | 1 | - | - | - | - |
| LUVITEC K-30 | - | - | 2 | 2 | 2 | 2 | - | - | - | - |
| Any crystallisation upon dilution in water? | No | No | No | No | No | Yes | No - after 24 hours [Yes - after 2weeks]. | No | Yes | Yes |
| Was crystallisation expected? | No | No | Yes | Yes | Yes | Yes | No | Yes | Yes | Yes |

## Claims

1. A concentrated solution comprising two triazole compounds and a water-miscible solvent where the two triazole compounds are selected from cyproconazole, propiconazole and difenoconazole; the total concentration of the two triazole compounds is from 0.5 to 600g/l; and the ratio of the total weight of the two triazole compounds to the total weight of any water-immiscible solvent is greater than 2 to 1.

2. A solution according to claim 1 in which the total concentration of the two triazole compounds is from 10 to 500g/l.

3. A solution according to claim 2 in which the total concentration of the two triazole compounds is from 200 to 450g/l.

4. A solution according to claim 1, 2 or 3 in which the water-miscible solvent is γ-butyrolactone, tetrahydrofurfuryl alcohol, *N*-methyl pyrrolidone, dimethyl sulphoxide, *N,N*-dimethylformamide, propylene glycol or ethyl lactate; or is a mixture of any of these solvents.

5. A solution according to claim 4 in which the water-miscible solvent is tetrahydrofurfuryl alcohol.

6. A solution as claimed in any of the preceding claims where the ratio of the total weight of the two triazole compounds to the total weight of any water-immiscible solvent is greater than 5 to 1.

7. A solution as claimed in claim 6 where the ratio is greater than 10 to 1.

8. A solution as claimed in claim 7 where the ratio is greater than 20 to 1.

9. A solution as claimed in any one of claims 1 to 5 where the solution comprises no water-immiscible solvent.

## Patentansprüche

1. Konzentrierte Lösung, die zwei Triazolverbindungen und ein mit Wasser mischbares Lösungsmittel umfasst, wobei die zwei Triazolverbindungen aus Cyproconazol, Propiconazol und Difenoconazol ausgewählt sind; die Gesamtkonzentration der zwei Triazolverbindungen 0,5 bis 600 g/l beträgt; und das Verhältnis des Gesamtgewichts der zwei Triazolverbindungen zum Gesamtgewicht eines beliebigen nicht mit Wasser mischbaren Lösungsmittels größer als 2 zu 1 beträgt.

2. Lösung nach Anspruch 1, in der die Gesamtkonzentration der zwei Triazolverbindungen 10 bis 500 g/l beträgt.

3. Lösung nach Anspruch 2, in der die Gesamtkonzentration der zwei Triazolverbindungen 200 bis 450 g/l beträgt.

4. Lösung nach Anspruch 1, 2 oder 3, in der das mit Wasser mischbare Lösungsmittel γ-Butyrolacton, Tetrahydrofurfurylalkohol, N-Methylpyrrolidon, Dimethylsulfoxid, N,N-Dimethylformamid, Propylenglykol oder Ethyllactat oder eine Mischung von beliebigen dieser Lösungsmittel ist.

5. Lösung nach Anspruch 4, in der das mit Wasser mischbare Lösungsmittel Tetrahydrofurfurylalkohol ist.

6. Lösung nach einem der vorhergehenden Ansprüche, wobei das Verhältnis des Gesamtgewichts der zwei Triazolverbindungen zum Gesamtgewicht eines beliebigen nicht mit Wasser mischbaren Lösungsmittels größer als 5 zu 1 ist.

7. Lösung nach Anspruch 6, wobei das Verhältnis größer als 10 zu 1 ist.

8. Lösung nach Anspruch 7, wobei das Verhältnis größer als 20 zu 1 ist.

9. Lösung nach einem der Ansprüche 1 bis 5, wobei die Lösung kein nicht mit Wasser mischbares Lösungsmittel umfasst.

## Revendications

1. Solution concentrée comprenant deux composés de triazole et un solvant miscible avec l'eau, **caractérisée en ce que** les deux composés de triazole sont choisis parmi le cyproconazole, le propiconazole et le difénoconazole ; la concentration totale des deux composés de triazole va de 0,5 à 600 g/l; et le rapport du poids total des deux composés de triazole au poids total d'un solvant quelconque non miscible avec l'eau est supérieur à de 2 à 1.

2. Solution selon la revendication 1, **caractérisée en ce que** la concentration totale des deux composés de triazole va de 10 à 500 g/l.

3. Solution selon la revendication 2, **caractérisée en ce que** la concentration totale des deux composés de triazole va de 200 à 450 g/l.

4. Solution selon la revendication 1, 2 ou 3, **caractérisée en ce que** le solvant miscible avec l'eau est la γ-butyrolactone, l'alcool tétrahydrofurfurylique, la N-méthylpyrrolidone, le diméthylsulfoxyde, le N,N-diméthylformamide, le propylène glycol ou le lactate d'éthyle ; ou est un mélange de ces solvants quelconques.

5. Solution selon la revendication 4, **caractérisée en ce que** le solvant miscible avec l'eau est l'alcool tétrahydrofurfurylique.

6. Solution selon l'une quelconque des revendications précédentes, **caractérisée en ce que** le rapport du poids total des deux composés de triazole au poids total d'un solvant quelconque non miscible avec l'eau est supérieur à de 5 à 1.

7. Solution selon la revendication 6, **caractérisée en ce que** le rapport est supérieur à de 10 à 1.

8. Solution selon la revendication 7, **caractérisée en ce que** le rapport est supérieur à de 20 à 1.

9. Solution selon l'une quelconque des revendications 1 à 5, **caractérisée en ce que** la solution ne comprend aucun solvant non miscible avec l'eau.
